# EUROPEAN PATENT APPLICATION

(11) **EP 4 800 364 A1**
(43) Date of publication of application: **02.09.2026**
(21) Application number: 24882015.1
(22) Date of filing: 28.08.2024
(51) Int. Cl.: G01L 9/00, G01N 35/10

(54) **FLUID SENSOR MODULE**

(30) Priority: 25.10.2023 JP 2023183033
(71) Applicant: Hitachi High-Tech Corporation, Minato-ku Tokyo 105-6409 (JP)
(72) Inventor: KANAMARU, Masatoshi, Tokyo 100-8280 (JP); AONO, Takanori, Tokyo 100-8280 (JP); IKEDA, Hiroshi, Tokyo 100-8280 (JP); TANOUE, Hidetsugu, Tokyo 105-6409 (JP); SUZUKI, Yoichiro, Tokyo 105-6409 (JP); IWASAKI, Tomio, Tokyo 100-8280 (JP)
(74) Representative: MERH-IP Matias Erny Reichl Hoffmann Patentanwälte PartG mbB
(86) International application number: PCT/JP2024/030674
(87) International publication number: WO 2025/088898

(57) **Abstract**

The invention provides a fluid sensor module having high electrical insulation and reliability. The fluid sensor module according to the invention includes: a flow path housing (25) that has therein a flow path (19) and an opened branch path (20) branching off from the flow path (19), the flow path housing (25) being made of a metal material; a semiconductor chip (3) that covers an opening (20a) of the branch path (20); a multilayer film (29) that is provided around the opening (20a) of the branch path (20) on a surface of the flow path housing (25) and includes an insulating film; and an adhesive layer (18) that is provided between the multilayer film (29) and the semiconductor chip (3) .

## Description

### Technical Field

The present invention relates to a fluid sensor module that measures a physical quantity of a fluid.

### Background Art

When a sensor is disposed at a position in direct contact with a fluid, a physical quantity (for example, pressure, temperature, and liquid surface) of the fluid can be accurately measured with high measurement sensitivity. For example, a pressure sensor includes a semiconductor element such as a piezoresistive element on a diaphragm made of a non-conductive material such as a silicon material or ceramics, and the diaphragm is deformed due to the pressure of the fluid. The pressure sensor measures the pressure of the fluid by electrically measuring a deformation amount of the diaphragm as a change in resistance by using a Wheatstone bridge circuit or the like and converting the measured change in resistance into a pressure value. When the Wheatstone bridge circuit provided in the pressure sensor is changed to a thermistor semiconductor, a temperature sensor capable of accurately measuring the temperature of the fluid can be configured.

PTL 1 describes an example of a fluid sensor module in the related art. A pressure sensor module described in PTL 1 includes a branch path, inside the flow path board, branched from a flow path toward an outer surface of a flow path board, and a piezoresistive semiconductor element disposed to close a terminal end portion of the branch path.

### Citation List

### Patent Literature

PTL 1: JP2022-175292A

### Summary of Invention

### Technical Problem

A board including a semiconductor element such as a piezoresistive element may be damaged or a malfunction may occur when electrical noise enters from the surroundings. Therefore, in order to measure a physical quantity of a fluid with high accuracy, it is important that a fluid sensor module is not affected by electrical noise in a measurement environment. However, in the fluid sensor module in the related art, measures against the electrical noise are not necessarily sufficient.

For example, in the pressure sensor module described in PTL 1, a thin film insulator is formed on a surface of a thinned piezoresistive semiconductor element to prevent electrical leakage of the piezoresistive semiconductor element. However, when a semiconductor board including the piezoresistive semiconductor element is bonded to the flow path board by a metal material, if the electrical noise enters from the flow path board, there is a concern that the piezoresistive semiconductor element may be damaged or a malfunction may occur.

Therefore, there is a demand for a highly reliable fluid sensor module that has high electrical insulation and does not cause damage or the like.

An object of the invention is to provide a fluid sensor module having high electrical insulation and reliability.

### Solution to Problem

A fluid sensor module according to the invention includes: a flow path housing that has therein a flow path and an opened branch path branching off from the flow path, the flow path housing being made of a metal material; a semiconductor chip that covers an opening of the branch path; a multilayer film that is provided around the opening of the branch path on a surface of the flow path housing and includes an insulating film; and an adhesive layer that is provided between the multilayer film and the semiconductor chip.

### Advantageous Effects of Invention

According to the invention, it is possible to provide a fluid sensor module having high electrical insulation and reliability.

Problems, configurations, and effects other than those described above will become apparent in the following description of embodiments of the invention.

### Brief Description of Drawings

[FIG. 1A] FIG. 1A is a diagram showing a configuration of a fluid sensor module according to Embodiment 1 of the invention, and is an exploded perspective view of the fluid sensor module.
[FIG. 1B] FIG. 1B is a diagram showing the configuration of the fluid sensor module according to Embodiment 1 of the invention, and is a cross-sectional view of the fluid sensor module in a YZ plane.
[FIG. 2] FIG. 2 is a cross-sectional view in the YZ plane showing an example of a configuration of a multilayer film in the fluid sensor module according to Embodiment 1.
[FIG. 3A] FIG. 3A is an enlarged schematic view of a periphery of a terminal end portion of a branch path in the fluid sensor module, and is a diagram showing the multilayer film shown in FIG. 2.
[FIG. 3B] FIG. 3B is an enlarged schematic view of the periphery of the terminal end portion of the branch path in the fluid sensor module, and is a diagram showing an example of a configuration of a multilayer film having a higher peeling strength.
[FIG. 4] FIG. 4 is a perspective view of the fluid sensor module, and is a diagram showing an example of an electrical wiring to a semiconductor chip.
[FIG. 5] FIG. 5 is a diagram showing a basic configuration of a dispensing device including the fluid sensor module according to Embodiment 1.
[FIG. 6] FIG. 6 is a diagram showing an internal state of a pipe, immediately after a nozzle aspirates a liquid, in an arm.
[FIG. 7] FIG. 7 is a diagram showing a configuration of a fluid sensor module according to Embodiment 2 of the invention, and is a cross-sectional view of the fluid sensor module in a YZ plane.
[FIG. 8] FIG. 8 is a cross-sectional view of a stainless steel tank including a liquid surface level sensor and a liquid surface level switch according to Embodiment 3 of the invention.
[FIG. 9] FIG. 9 is an enlarged schematic view of a periphery of a terminal end portion of a branch path in a fluid sensor module according to a comparative example.

### Description of Embodiments

In a fluid sensor module according to the invention, a semiconductor chip for measuring a physical quantity of a fluid can ensure insulation reliability and adhesion reliability by a multilayer film containing an insulating material formed on a flow path housing. Therefore, a sensing unit (semiconductor element such as a piezoresistive element) of the semiconductor chip is not affected by electrical noise from the flow path housing side. When the fluid sensor module according to the invention is used as a pressure sensor in a dispensing device and the fluid sensor module is disposed in the vicinity of a nozzle, a minute pressure change in aspiration and discharge of the nozzle can be grasped, and detection for an abnormality in dispensing and estimation for a dispensing amount can be performed with high accuracy.

Hereinafter, embodiments according to the invention will be described with reference to the drawings. The embodiments are examples for describing the invention, and are omitted and simplified as appropriate for clarity of description. The invention can be implemented in various other forms. Unless otherwise specified, each component may be singular or plural.

In order to facilitate understanding of the invention, a position, size, shape, range, or the like of each component shown in the drawings may not represent an actual position, size, shape, range, or the like. Therefore, the invention is not necessarily limited to the positions, sizes, shapes, ranges, or the like disclosed in the drawings.

When there are a plurality of components having the same or similar functions, the components may be described by using the same reference signs assigned with different subscripts. When there is no need to distinguish the plurality of components, the description may be made by omitting the subscripts.

In the following description, the silicon dioxide (SiO₂) is also referred to as silicon dioxide.

### [Embodiment 1]

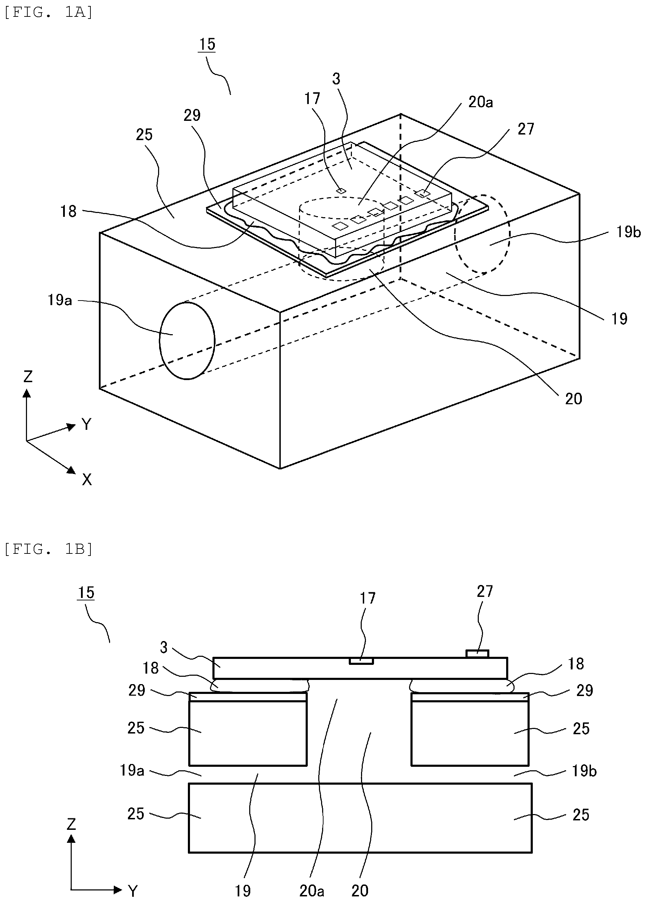

A fluid sensor module according to Embodiment 1 of the invention will be described with reference to FIGS. 1A to 6. The fluid sensor module measures a physical quantity such as a pressure, a temperature, and a liquid surface of a fluid (for example, water) flowing therein. In the following description, in the fluid sensor module, a direction (a long-side direction of the fluid sensor module) in which the fluid flows is defined as a Y direction, a height direction is defined as a Z direction, and a direction (a short-side direction of the fluid sensor module) perpendicular to the Y direction and the Z direction is defined as an X direction.

A configuration of a fluid sensor module 15 according to the embodiment will be described with reference to FIGS. 1A and 1B. In the following description, as an example, the fluid sensor module 15 measures the pressure of the fluid flowing therein.

FIGS. 1A and 1B are diagrams showing the configuration of the fluid sensor module 15 according to the embodiment. FIG. 1A is an exploded perspective view of the fluid sensor module 15. FIG. 1B is a cross-sectional view of the fluid sensor module 15 in a YZ plane.

The fluid sensor module 15 includes a flow path housing 25 and a semiconductor chip 3, and is disposed, for example, in a pipe through which the fluid flows. The flow path housing 25 is also referred to as a flow path board.

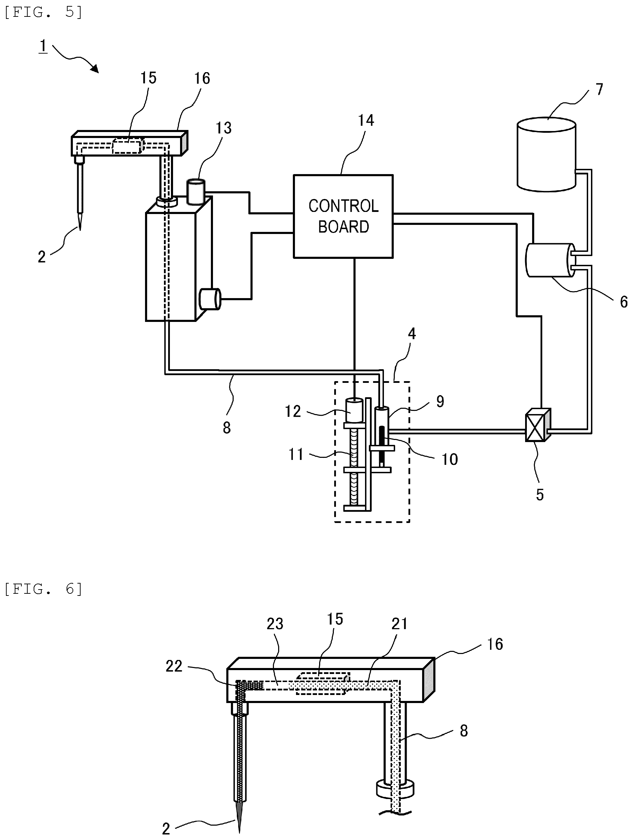

The flow path housing 25 includes a flow path 19 therein. A fluid whose physical quantity is to be measured flows through the flow path 19. The flow path housing 25 includes a flow path inlet 19a through which the fluid flows into the flow path 19 and a flow path outlet 19b through which the fluid flows out from the flow path 19. The flow path inlet 19a and the flow path outlet 19b are provided with screw portions (not shown). With this screw portion, the fluid sensor module 15 can be connected to a device (for example, a dispensing device 1 described later with reference to FIG. 5) in which the fluid sensor module 15 is disposed. The flow path 19 is connected to a pipe provided in the device, in which the fluid sensor module 15 is disposed, by the screw portion via a joint.

The flow path housing 25 has therein an opened branch path 20 branching off from the flow path 19 toward an outer surface of the flow path housing 25. In the embodiment, as shown in FIGS. 1A and 1B, the branch path 20 is branched off and opened from the flow path 19 in the Z direction (upward in the height direction). That is, the branch path 20 includes an opening 20a in an upper portion of the flow path housing 25, and the opening 20a is a terminal end portion. A direction in which the branch path 20 branches is not limited to this direction, and may be downward in the height direction or the X direction (lateral direction).

The flow path housing 25 is made of a metal material, and is preferably made of stainless steel (SUS304) having excellent corrosion resistance.

The semiconductor chip 3 is formed of a thin film and is disposed to cover the opening 20a of the branch path 20. The semiconductor chip 3 includes a semiconductor element 17, for example, a piezoresistive element in a central portion thereof. The semiconductor element 17 is, for example, an element that detects a strain of a diaphragm. The semiconductor chip 3 includes, in a peripheral portion thereof, a plurality of electrode pads 27 for transmitting electrical signals to the outside. FIGS. 1A and 1B show an example in which the plurality of electrode pads 27 are arranged in a concentrated manner at one end portion of the semiconductor chip 3. The plurality of electrode pads 27 may be arranged at four end portions of the semiconductor chip 3. In the embodiment, a length of one piece of the semiconductor chip 3 is 2.7 mm.

A multilayer film 29 is provided around the opening 20a of the branch path 20 on the surface of the flow path housing 25. An adhesive layer 18 is provided on the multilayer film 29. The semiconductor chip 3 is bonded (adhered) to the multilayer film 29 via the adhesive layer 18, and is bonded to the flow path housing 25 via the adhesive layer 18 and the multilayer film 29. That is, in the fluid sensor module 15 according to the embodiment, the multilayer film 29 is provided on the flow path housing 25, the adhesive layer 18 is provided on the multilayer film 29, and the semiconductor chip 3 is provided on the adhesive layer 18.

The adhesive layer 18 is provided between the multilayer film 29 and the semiconductor chip 3, and is preferably made of silver. For example, the adhesive layer 18 can be made of silver paste containing silver particles. The adhesive layer 18 made of the silver paste is characterized in that it has high adhesive strength, is hardly peeled off, and is resistant to water. Therefore, the adhesive layer 18 made of the silver paste can improve the reliability of the fluid sensor module 15.

The multilayer film 29 includes an insulating film made of an insulating material, and is positioned between the flow path housing 25 and the adhesive layer 18. The details of the multilayer film 29 will be described later.

Since the fluid sensor module 15 according to the embodiment includes the multilayer film 29 including the insulating film on the surface of the flow path housing 25, it is possible to improve both electrical insulation and adhesiveness (reliability of structure).

When the flow path housing 25 made of stainless steel and the semiconductor chip 3 are directly bonded to each other by metal silver paste (the adhesive layer 18), the flow path housing 25 and the semiconductor chip 3 are electrically connected to each other. In this configuration, when electrical noise enters the flow path housing 25, the semiconductor chip 3 may be broken or a malfunction may occur due to the electrical noise.

In the fluid sensor module 15 according to the embodiment, since the semiconductor chip 3 is bonded to the flow path housing 25 via the multilayer film 29 including the adhesive layer 18 and the insulating film, the electrical noise entering from the flow path housing 25 can be blocked by the insulating film of the multilayer film 29.

In general, as an insulating structure of the fluid sensor module, it is conceivable to provide a single-layer silicon dioxide film as the insulating film on the flow path housing 25 made of stainless steel (SUS304), and to dispose a semiconductor chip on the silicon dioxide film with silver paste interposed therebetween as an adhesive layer. However, the silicon dioxide film and the silver paste have a problem in adhesiveness at an interface therebetween.

In order to examine this problem, a peeling energy E at the interface between two layers of several types is obtained by molecular dynamics simulation. The peeling energy E between the two layers can be represented by Formula (1). $E = Es - Ec$

In Formula (1), Ec represents an energy between two layers in a bonding state, and Es represents an energy between two layers in a separation state.

The peeling energy E between the stainless steel (SUS304) and the silicon dioxide (SiO₂) is 0.318 J/m². On the other hand, the peeling energy E between the silicon dioxide and the silver is 0.100 J/m². From this result, it is considered that although the pressure of the fluid is repeatedly applied to the interface between the silicon dioxide and the silver, since the peeling energy E is smaller than that of the interface between the stainless steel and the silicon dioxide, there is a problem in long-term reliability.

The peeling energy E between the stainless steel (SUS304) and silicon (Si) is 0.337 J/m², which is substantially equal to the peeling energy E between the stainless steel and the silicon dioxide.

Based on the above analysis result, the fluid sensor module 15 according to the embodiment has a configuration in which the silicon dioxide film and the silver paste are not in contact with each other. In the fluid sensor module 15 according to the embodiment, the multilayer film 29 contains a material, for example, silicon having good adhesiveness to the silver paste and also good adhesiveness to the silicon dioxide.

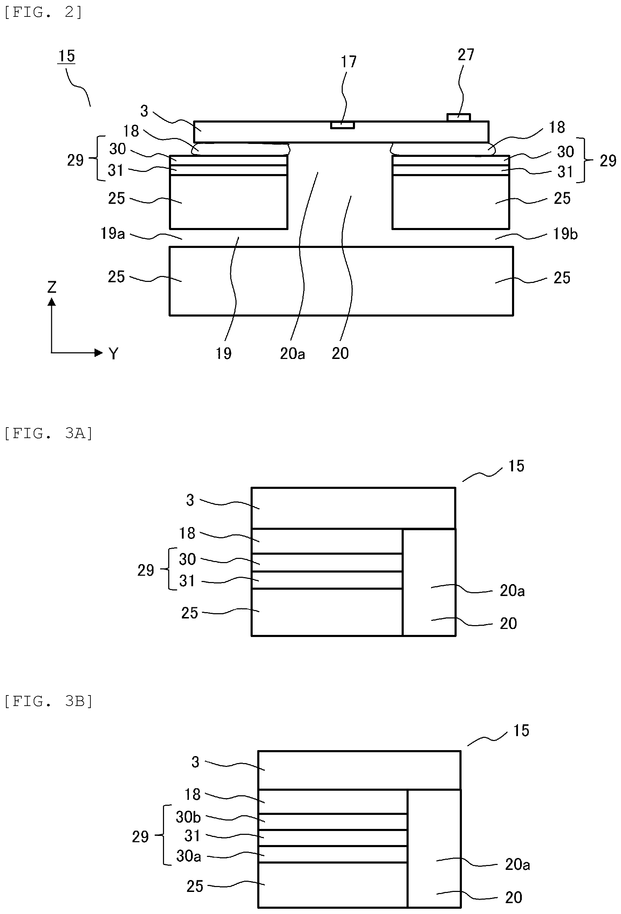

FIG. 2 is a cross-sectional view in the YZ plane showing an example of the configuration of the multilayer film 29 in the fluid sensor module 15 according to the embodiment.

The multilayer film 29 includes a silicon dioxide film 31 as an insulating film in contact with the flow path housing 25 and a silicon film 30 stacked on the silicon dioxide film 31. The silicon film 30 is in contact with the silver paste that is the adhesive layer 18. The silicon dioxide and the silicon form a siloxane bond via oxygen. Therefore, the silicon dioxide film 31 and the silicon film 30 have high adhesion and do not peel off.

The fluid sensor module 15 according to the embodiment includes the silicon dioxide film 31, which is an insulating film, and thus has high electrical insulation. Since the fluid sensor module 15 according to the embodiment includes the silicon film 30 between the silicon dioxide film 31 and the silver paste (adhesive layer 18), the peeling strength at each interface is high, and the reliability of the structure is high. For example, in the fluid sensor module 15 according to the embodiment, even when pressure fluctuation (tensile stress) of the fluid is repeatedly applied, peeling does not occur in each film or layer.

FIGS. 3A and 3B are enlarged schematic views showing the periphery of the terminal end portion (opening 20a) of the branch path 20 in the fluid sensor module 15 according to the embodiment. An example of the configuration of the multilayer film 29 will be further described with reference to FIGS. 3A and 3B.

FIG. 3A shows the multilayer film 29 shown in FIG. 2. That is, the multilayer film 29 includes the silicon dioxide film 31 and the silicon film 30.

In the configuration shown in FIG. 3A, the silicon dioxide film 31 is provided on the flow path housing 25, the silicon film 30 is provided on the silicon dioxide film 31, the silver paste, which is the adhesive layer 18, is provided on the silicon film 30, and the semiconductor chip 3 is provided on the adhesive layer 18. That is, the semiconductor chip 3 is provided on the flow path housing 25 via the multilayer film 29 by the silver paste (adhesive layer 18).

The multilayer film 29 is in contact with the branch path 20 through which the fluid flows. Since the fluid sensor module 15 according to the embodiment is resistant to the pressure fluctuation of the fluid and permeation of the fluid (water), the reliability of the structure is high.

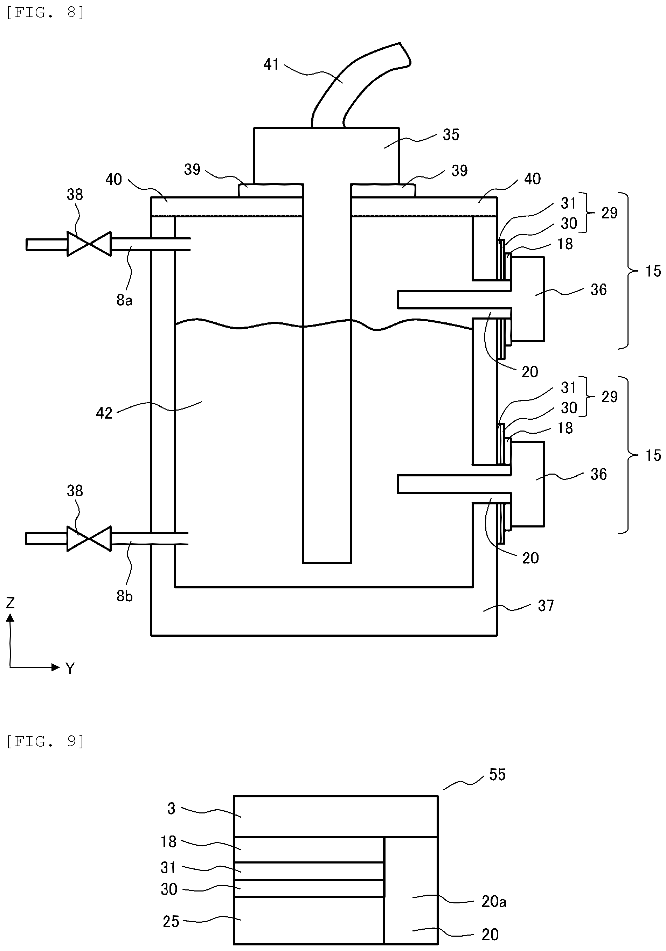

FIG. 9 is an enlarged schematic view of the periphery of the terminal end portion of the branch path 20 in a fluid sensor module 55 according to a comparative example.

In the fluid sensor module 55 according to the comparative example, the silicon film 30 is provided on the flow path housing 25, the silicon dioxide film 31 is provided on the silicon film 30, the silver paste, which is the adhesive layer 18, is provided on the silicon dioxide film 31, and the semiconductor chip 3 is provided on the adhesive layer 18.

In the fluid sensor module 55 according to the comparative example, the silicon dioxide film 31 and the adhesive layer 18 (silver paste) are in contact with each other at an interface. As described above, the peeling energy E at the interface between silicon dioxide and silver is small. Therefore, in the fluid sensor module 55 according to the comparative example, the silicon dioxide film 31 and the adhesive layer 18 are easily peeled off from each other.

A peeling test by an air pressure is performed three times on the fluid sensor module 55 according to the comparative example. In the three tests, an average value of the air pressure, when the fluid sensor module 55 is broken, is 0.38 MPa. In the fluid sensor module 55, the interface between the silicon dioxide film 31 and the adhesive layer 18 (silver paste) is peeled off and broken.

The fluid sensor module 15 according to the embodiment including the multilayer film 29 shown in FIG. 3A is similarly subjected to the peeling test by the air pressure three times. The fluid sensor module 15 according to the embodiment is not broken even when the air pressure is increased to 0.9 MPa and applied. Further, the fluid sensor module 15 according to the embodiment is not broken even when a test of repeatedly applying the air pressure of 0.6 MPa for 100,000 cycles is performed. As can be seen from these test results, the fluid sensor module 15 according to the embodiment has high reliability of the structure and good long-term reliability.

The silicon dioxide has high adhesiveness to stainless steel (SUS304). In the fluid sensor module 15 according to the embodiment including the multilayer film 29 shown in FIG. 3A, since the silicon dioxide film 31 can be provided thick as an insulating film on the flow path housing 25 made of stainless steel, the electrical insulation can be further improved.

From the test result that the fluid sensor module 15 is not broken, it can be seen that the peeling strength between the silicon film 30 and the adhesive layer 18 (silver paste) is also high.

The fluid sensor module 15 according to the embodiment includes the multilayer film 29 having the silicon dioxide film 31 as an insulating film and the silicon film 30. At the interface in contact with silver (that is, the adhesive layer 18), the silicon film 30 is disposed, and the silicon dioxide is not disposed.

FIG. 3B is a diagram showing an example of the configuration of the multilayer film 29 having a higher peeling strength. The multilayer film 29 includes a first silicon film 30a in contact with the flow path housing 25, the silicon dioxide film 31 that is an insulating film provided on the first silicon film 30a, and a second silicon film 30b provided on the silicon dioxide film 31. The silver paste as the adhesive layer 18 is provided on the second silicon film 30b, and the semiconductor chip 3 is provided on the adhesive layer 18.

In the configuration shown in FIG. 3B, the interface between the two layers is made of stainless steel and silicon, silicon and silicon dioxide, or silicon and silver, and has a peeling strength higher than the configuration shown in FIG. 3A. Therefore, the fluid sensor module 15 according to the embodiment including the multilayer film 29 shown in FIG. 3B has high electrical insulation and high reliability of the structure.

In addition, in a configuration in which the silicon dioxide film 31, which is an insulating film, is provided on the flow path housing 25 made of stainless steel, since moisture easily permeates the interface of the silicon dioxide, there is a concern that a bonding strength decreases at the interface between the stainless steel and the silicon dioxide.

The fluid sensor module 15 according to the embodiment including the multilayer film 29 shown in FIG. 3B can prevent a decrease in the bonding strength at such an interface. In the fluid sensor module 15, since the first silicon film 30a is provided on the flow path housing 25 made of stainless steel and the silicon dioxide film 31 is in contact with the silicon films 30a and 30b having high adhesion, it is possible to maintain a high bonding strength at the interface.

The multilayer film 29 can be formed using a thin film forming device such as a sputtering device or an ion plating device. By performing masking on a portion on the flow path housing 25, where the multilayer film 29 is not formed, using these thin film forming devices, the multilayer film 29 can be formed at any position of the flow path housing 25. In addition, since thin films can be simultaneously formed on a plurality of flow path housings 25, the multilayer film 29 can be formed in a short time and at low cost.

On the surface of the flow path housing 25, there is a minute uneven processing mark after machining. For example, when the arithmetic average roughness Ra of the surface of the flow path housing 25 is 1.6, a maximum height roughness is about 6 µm to 7 µm. In order to form a uniform insulating film on the uneven surface of the flow path housing 25, it is necessary to change the thickness of the insulating film according to a surface roughness of the flow path housing 25. Therefore, in the formation of the multilayer film 29, it is preferable to change a film thickness of the silicon dioxide film 31, which is an insulating film, according to the surface roughness of the flow path housing 25.

In general, when a processing roughness of the surface of the flow path housing 25 is reduced, for example, when the surface of the flow path housing 25 is mirror-finished, the processing cost increases. Therefore, as general processing accuracy, the arithmetic average roughness Ra is preferably about 1.6.

In order to form the silicon dioxide film 31 on the flow path housing 25 having this surface roughness, the silicon dioxide film 31 needs to have a thickness of 1.2 µm or more according to experimental results. An insulation withstand voltage of the silicon dioxide film 31 at this time is about 44 V, and has a sufficient withstand voltage as compared with a drive voltage of 5 V for driving the semiconductor element 17. When the thickness of the silicon dioxide film 31 is thinner than 1.2 µm, it is difficult to obtain an electrically insulated state due to the conduction of the silicon dioxide film 31, and it is also difficult to prevent electrical noise.

Therefore, when the arithmetic average roughness Ra of the surface of the flow path housing 25 is 1.6, the thickness of the silicon dioxide film 31 is preferably 1.2 µm or more.

On the other hand, since the silicon film 30 is a material involved in adhesion or adhesiveness, the silicon film 30 may have a thickness of about 0.2 µm.

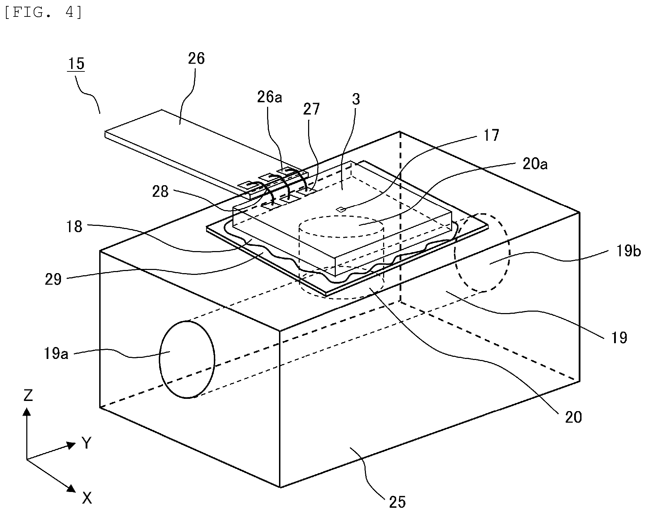

FIG. 4 is a perspective view of the fluid sensor module 15, and is a diagram showing an example of an electrical wiring to the semiconductor chip 3.

The semiconductor chip 3 is connected to a flexible board 26 for the electrical wiring by wires 28. The flexible board 26 includes electrode pads 26a and is supported by a frame (not shown). The electrode pads 27 of the semiconductor chip 3 are connected to the electrode pads 26a of the flexible board 26 by the wires 28.

For example, a gold wire and an aluminum wire can be used as the wire 28. An anisotropic conductive film (ACF) may be used instead of the wire 28. A printed circuit board (PCB) may be used as the flexible board 26 for electrical wiring.

The fluid flowing through the flow path 19 flows into the branch path 20 and applies a pressure to the semiconductor chip 3. The semiconductor chip 3 is deformed when the pressure is applied, and the deformation is transmitted to the flexible board 26 as an electric signal. The pressure of the fluid is measured by the electric signal transmitted to the flexible board 26.

In the fluid sensor module 15 according to the embodiment, the thin film semiconductor chip 3 is disposed to cover the opening 20a of the branch path 20. In the fluid sensor module 15 according to the embodiment, since a distance from the flow path 19 to the opening 20a (terminal end portion) of the branch path 20 is short, a change in the pressure of the fluid flowing through the flow path 19 can be accurately and quickly detected.

The semiconductor chip 3 may include a strain gauge, a piezoelectric element, or the like in addition to the piezoresistive element as the semiconductor element 17 that detects the strain of the diaphragm.

FIG. 5 is a diagram showing a basic configuration of the dispensing device 1 including the fluid sensor module 15 according to the embodiment. The dispensing device 1 is a device that automatically dispenses a liquid that is a sample or a reagent.

The dispensing device 1 includes a nozzle 2, a syringe pump 4, an electromagnetic valve 5, a gear pump 6, and a system water tank 7 as a flow path system. These components are connected to each other by a pipe 8. The dispensing device 1 includes a dispensing mechanism 13 that is a mechanism for dispensing the liquid, an arm 16 that is a mechanism for moving the nozzle 2, and a control board 14 as a control unit that controls the entire dispensing device 1.

The syringe pump 4 includes a container 9, a plunger 10, a ball screw 11, and a drive motor 12. The drive motor 12 is controlled by the control board 14 in the same manner as a motor that drives the dispensing mechanism 13 or the like.

The arm 16 includes the fluid sensor module 15 therein. The arm 16 can rotate and move up and down in order to move the nozzle 2 to a position where the liquid is aspirated and discharged.

FIG. 6 is a diagram showing an internal state of the pipe 8, immediately after the nozzle 2 aspirates the liquid, in the arm 16.

An inside of the pipe 8 is filled with system water 21 which is water for syringe pressure transmission. The pipe 8 transmits the pressure of the system water 21 by the syringe pump 4 (FIG. 5) to the nozzle 2. The nozzle 2 can aspirate and discharge a liquid 22, which is a sample or a reagent, by transmitting the pressure.

When the liquid 22 is aspirated from the nozzle 2, the plunger 10 (FIG. 5) in the syringe pump 4 is pulled while the electromagnetic valve 5 (FIG. 5) is in a closed state. When the nozzle 2 discharges the liquid 22, the plunger 10 in the syringe pump 4 is pushed into the container 9 (FIG. 5) while the electromagnetic valve 5 is in the closed state. When the nozzle 2 aspirates the liquid 22, the nozzle 2 aspirates the liquid 22 after aspirating segment air 23 for the segment, such that the liquid 22 does not mix with the system water 21 in the pipe 8.

After the nozzle 2 discharges the liquid 22, cleaning of the nozzle 2 is performed. During the cleaning of the nozzle 2, the system water 21 present in the flow path inside the nozzle 2 is pushed out simultaneously with cleaning water being applied to an outer wall of the nozzle 2. To push out the system water 21 inside the nozzle 2, the electromagnetic valve 5 (FIG. 5) is opened and the pressure of the gear pump 6 (FIG. 5) is used. Accordingly, the system water 21 can be pushed out at a pressure higher than when pushed out by the syringe pump 4.

In the dispensing device 1, the fluid sensor module 15 is connected to the pipe 8 in order to detect an abnormality such as clogging or air aspiration of the nozzle 2 that may occur during a dispensing operation. The fluid sensor module 15 monitors the pressure of the system water 21 and detects a pressure change of the system water 21 that occurs when an abnormality such as clogging or air aspiration of the nozzle 2 occurs.

The fluid sensor module 15 according to the embodiment can be used as a small sensor since the small thin film semiconductor chip 3 is provided in the opening 20a of the branch path 20 formed in the flow path housing 25.

Since the fluid sensor module 15 according to the embodiment can be used as a small pressure sensor, it can be disposed at any position for measuring a pressure. In the example shown in FIG. 5, the dispensing device 1 includes the fluid sensor module 15 inside the arm 16 at a position as close as possible to the nozzle 2 in order to sensitively capture the pressure change of the nozzle 2. The fluid sensor module 15 is not limited to being disposed inside the arm 16, and can be disposed at any position such as a side surface of the dispensing mechanism 13.

In the embodiment, as an example, the fluid sensor module 15 measures the pressure of the fluid, and the semiconductor chip 3 includes a piezoresistive element as the semiconductor element 17. Since the semiconductor chip 3 includes a thermistor element as the semiconductor element 17, the fluid sensor module 15 can measure the temperature of the fluid. Since the fluid sensor module 15 can be used as a small temperature sensor, it can be attached to any position of an object whose temperature is to be measured.

Similar to the fluid sensor module 15 that is a pressure sensor, the fluid sensor module 15 that is a temperature sensor can improve the electrical insulation and the adhesiveness, and can prevent electrical noise and improve reliability even when the fluid sensor module 15 is disposed at a position where a pressure is applied.

### [Embodiment 2]

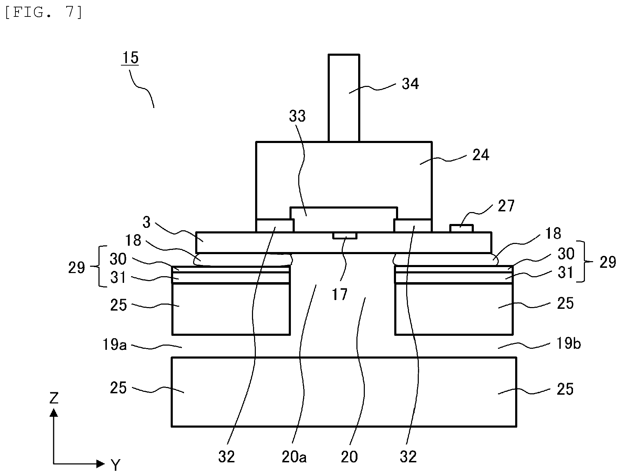

The fluid sensor module 15 according to Embodiment 2 of the invention will be described with reference to FIG. 7. Hereinafter, regarding the fluid sensor module 15 according to the embodiment, differences from the fluid sensor module 15 according to Embodiment 1 will be mainly described. The fluid sensor module 15 according to the embodiment also measures the pressure as a physical quantity of the fluid flowing therein.

FIG. 7 is a diagram showing a configuration of the fluid sensor module 15 according to the embodiment, and is a cross-sectional view of the fluid sensor module 15 in the YZ plane.

The multilayer film 29 includes the silicon dioxide film 31 as an insulating film in contact with the flow path housing 25 and the silicon film 30 stacked on the silicon dioxide film 31.

The fluid sensor module 15 according to the embodiment includes a cap 24 that covers a part of the semiconductor chip 3. The cap 24 is provided above the semiconductor chip 3, is a member that covers the semiconductor element 17 provided in the semiconductor chip 3, and can be made of silicon or glass.

The cap 24 includes a cavity space 33 between the cap 24 and the semiconductor chip 3, more specifically, between the cap 24 and the semiconductor element 17. The cavity space 33 is a space for preventing the semiconductor chip 3 from coming into contact with the cap 24 when the semiconductor chip 3 is slightly deformed due to the pressure of the fluid.

The cap 24 is bonded to the semiconductor chip 3 by a plurality of bonding portions 32. The bonding portion 32 can be made of an insulating material. When the material of the bonding portion 32 is a photosensitive resin material that can be patterned, the plurality of bonding portions 32 can be arranged in any pattern.

The fluid sensor module 15 according to the embodiment includes a pressing mechanism 34 above the cap 24. The pressing mechanism 34 is a member for pressing the cap 24 against the semiconductor chip 3. For example, the pressing mechanism 34 includes a coil spring and presses the cap 24 against the semiconductor chip 3 by an elastic force of the coil spring.

A tensile stress is applied to the semiconductor chip 3 by the pressure of the fluid flowing through the branch path 20. The pressing mechanism 34 can apply a force to the semiconductor chip 3 in a direction opposite to the direction in which the pressure of the fluid is applied, and can apply a compressive stress to an adhesive portion (for example, the adhesive layer 18) of the semiconductor chip 3 to the flow path housing 25.

Since the fluid sensor module 15 according to the embodiment includes the cap 24 and the pressing mechanism 34, the reliability of adhesion is high against the pressure of the fluid repeatedly applied to a lower surface of the semiconductor chip 3, the fluid can be prevented from leaking at the adhesive portion of the semiconductor chip 3, and the reliability can be improved.

In the fluid sensor module 15 according to the embodiment, the semiconductor chip 3 is insulated from the cap 24 and the pressing mechanism 34 by the bonding portion 32 made of the insulating material. That is, in the fluid sensor module 15 according to the embodiment, the insulating material is disposed both above and below the semiconductor chip 3 (both sides in the Z direction). Therefore, the fluid sensor module 15 according to the embodiment can prevent electrical noise from the upper surface and the lower surface of the semiconductor chip 3, have high electrical insulation, and can more effectively prevent the electrical noise from entering from the outside.

### [Embodiment 3]

A fluid sensor module according to Embodiment 3 of the invention will be described with reference to FIG. 8. Hereinafter, regarding the fluid sensor module 15 according to the embodiment, differences from the fluid sensor module 15 according to Embodiment 1 will be mainly described. The fluid sensor module 15 according to the embodiment measures a liquid surface as a physical quantity of a fluid.

FIG. 8 is a cross-sectional view of a stainless steel tank 37 including a liquid surface level sensor 35 and a liquid surface level switch 36. In FIG. 8, a long-side direction of the stainless steel tank 37 is the Y direction, a height direction is the Z direction, and a direction perpendicular to the Y direction and the Z direction is the X direction.

The stainless steel tank 37 stores a liquid 42 which is a fluid. The stainless steel tank 37 includes a pipe 8a for introducing the liquid 42 and a pipe 8b for discharging the liquid 42. The pipe 8a and the pipe 8b are each connected to the stainless steel tank 37 via a valve 38.

The stainless steel tank 37 includes an upper lid 40 and the liquid surface level sensor 35 in an upper portion thereof. The liquid surface level sensor 35 is a sensor that detects the liquid surface of the liquid 42 and measures the amount of the liquid 42 contained in the stainless steel tank 37, and has a known configuration. The liquid surface level sensor 35 is disposed above the upper lid 40 by a screw portion (not shown) formed on the upper lid 40 with a seal material 39 interposed therebetween. An electric cord 41 for transmitting an electrical signal is connected to the liquid surface level sensor 35.

The stainless steel tank 37 includes the fluid sensor module 15 according to the embodiment on a side surface thereof. The stainless steel tank 37 shown in FIG. 8 includes two fluid sensor modules 15 positioned separately in an up-down direction (Z direction).

When the liquid surface of the liquid 42 reaches an upper limit value of the stainless steel tank 37, the fluid sensor module 15 positioned at an upper portion of the two fluid sensor modules 15 detects the liquid surface and issues a warning signal. When the liquid surface of the liquid 42 reaches a lower limit value of the stainless steel tank 37, the fluid sensor module 15 positioned at a lower portion detects the liquid surface and issues a warning signal.

The fluid sensor module 15 according to the embodiment includes a side wall of the stainless steel tank 37, the multilayer film 29 provided on a side wall of the stainless steel tank 37, the adhesive layer 18 provided on the multilayer film 29, and the liquid surface level switch 36 provided on the adhesive layer 18. The side wall of the stainless steel tank 37 corresponds to the flow path housing 25 of the fluid sensor module 15 according to Embodiment 1 or 2.

The multilayer film 29 includes the silicon dioxide film 31 in contact with the side wall of the stainless steel tank 37, and the silicon film 30 provided on the silicon dioxide film 31. The silicon film 30 is in contact with the adhesive layer 18. The adhesive layer 18 is made of silver paste.

The liquid surface level switch 36 is a sensor that detects the position of the liquid surface of the liquid 42 inside the stainless steel tank 37, and has a known configuration. The liquid surface level switch 36 corresponds to the semiconductor chip 3 of the fluid sensor module 15 according to Embodiment 1 or 2.

Since the fluid sensor module 15 according to the embodiment has the above configuration and the liquid surface level switch 36 is insulated from the stainless steel tank 37, it is possible to prevent electrical noise from entering the liquid surface level switch 36 from the stainless steel tank 37. Similarly to the fluid sensor module 15 according to Embodiment 1, the fluid sensor module 15 according to the embodiment can improve both the electrical insulation and the adhesiveness (the reliability of the structure).

The invention is not limited to the above-described embodiments and can include various modifications. For example, the above-described embodiments have been described in detail to facilitate understanding of the invention, and the invention is not necessarily limited to those including all configurations described above. A part of a configuration of one embodiment can be replaced with a configuration of another embodiment. A configuration of another embodiment can be added to a configuration of one embodiment. A part of a configuration in each embodiment may be deleted, or may be added with or replaced with another configuration.

### Reference Signs List

1: dispensing device
2: nozzle
3: semiconductor chip
4: syringe pump
5: electromagnetic valve
6: gear pump
7: system water tank
8: pipe
8a, 8b: pipe
9: container
10: plunger
11: ball screw
12: drive motor
13: dispensing mechanism
14: control board
15: fluid sensor module
16: arm
17: semiconductor element
18: adhesive layer
19: flow path
19a: flow path inlet
19b: flow path outlet
20: branch path
20a: opening of branch path
21: system water
22: liquid
23: segment air
24: cap
25: flow path housing
26: flexible board
26a: electrode pad
27: electrode pad
28: wire
29: multilayer film
30: silicon film
30a: first silicon film
30b: second silicon film
31: silicon dioxide film
32: bonding portion
33: cavity space
34: pressing mechanism
35: liquid surface level sensor
36: liquid surface level switch
37: stainless steel tank
38: valve
39: seal material
40: upper lid
41: electric cord
42: liquid
55: fluid sensor module according to comparative example

## Claims

1. A fluid sensor module comprising:
a flow path housing that has therein a flow path and an opened branch path branching off from the flow path, the flow path housing being made of a metal material;
a semiconductor chip that covers an opening of the branch path;
a multilayer film that is provided around the opening of the branch path on a surface of the flow path housing and includes an insulating film; and
an adhesive layer that is provided between the multilayer film and the semiconductor chip.

2. The fluid sensor module according to claim 1, wherein
the adhesive layer is made of silver paste, and
the multilayer film includes a silicon dioxide film as the insulating film and a silicon film provided on the insulating film.

3. The fluid sensor module according to claim 2, wherein
the silicon film of the multilayer film is in contact with the adhesive layer.

4. The fluid sensor module according to claim 2, wherein
an arithmetic average roughness Ra of a surface of the flow path housing is 1.6, and a thickness of the silicon dioxide film is 1.2 µm or more.

5. The fluid sensor module according to claim 1, comprising:
a cap that is provided above the semiconductor chip, covers a part of the semiconductor chip, and is bonded to the semiconductor chip by an insulating material; and
a pressing mechanism that presses the cap against the semiconductor chip.
